Europäisches Patentamt

European Patent Office

Office européen des brevets

(11) Publication number: **0 062 067**
**B1**

(12) EUROPEAN PATENT SPECIFICATION

(45) Date of publication of patent specification: 05.10.88

(51) Int. Cl.⁴: **B 21 D 51/16,** B 21 K 1/14,
F 16 D 3/20

(21) Application number: 81900944.0

(22) Date of filing: 07.04.81

(86) International application number:
PCT/JP81/00079

(87) International publication number:
WO 81/03294 26.11.81 Gazette 81/28

(54) Manufacturing method for a tubular shell of a universal joint.

(30) Priority: 24.05.80 JP 69499/80

(49) Date of publication of application:
13.10.82 Bulletin 82/41 .

(45) Publication of the grant of the patent:
05.10.88 Bulletin 88/40

(84) Designated Contracting States:
DE FR GB

(56) References cited:
DE-A-2 044 724
JP-A-53 077 869
JP-A-55 030 548
JP-B-51 030 549
JP-U-53 093 538
US-A-1 623 059
US-A-2 274 835
US-A-2 352 776
US-A-2 947 081
US-A-3 792 596

(73) Proprietor: **TOYOTA JIDOSHA KABUSHIKI
KAISHA**
1, Toyota-cho Toyota-shi
Aichi-ken 471 (JP)

(72) Inventor: **TAKEDA, Koichi**
1, Shimoyose Kitahongo-cho
Okazaki-shi Aichi 444 (JP)
Inventor: **IKEDA, Sadao**
34-3, Shiokura Hanazono-cho
Toyota-shi Aichi 473 (JP)
Inventor: **MATSUBARA, Koichi**
84-1, Otogoyama, Midori-ku
Nagoya-shi, Aichi-ken (JP)

(74) Representative: **Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2 (DE)**

Courier Press, Leamington Spa, England.

## Description

This invention relates to a manufacturing method for a shell of a universal-joint according the pre-characterizing portion of claim 1.

As a species of universal-joints for flexibly joining a pair of rotary shafts, one is known wherein rotary movement of one rotary shaft is transmitted to the other rotary shaft such that one of a shell of the universal-joint is fixed to one rotary shaft, such as a differential side gear shaft in a vehicle, while the other end of the shell allows the other rotary shaft to be inserted thereinto so as to perform the transmission through engagement of an engaging portion disposed on the other shaft for example rollers with grooves axially formed on the internal side of the shell.

In some universal-joints belonging to this category such as tripod joint, double offset plunging joint, Rzeppa joint, Weiss joint, etc., the shell has been conventionally manufactured by forming a hollow cylindrical material or blank of thick wall through extrusion such as hot forging or cold forging, followed by a forging process applied on the thick walled material with a punch and a die and a machining process for forming the grooves to a desired shape and dimension.

The above-mentioned manufacturing method is problematical in various respects, for example, being low in productivity because of its laborious and time-consuming process of machining when finished, consequent cost rising, or deterioration of strength of the products because of machining or cutting of the material after the forging.

Adoption of the forging process which is inherently required to be large in the wall-thickness inevitably makes the products to be thick-walled in the above-mentioned method, which necessitates the products heavy and expensive in material cost, to a great disadvantage.

US—A 2 352 776 shows a manufacturing method for a tubular shell of a universal joint, which comprises a plurality of processes applied successively to a hollow cylindrical blank, which has been produced by means of, for example, deep drawing of a sheet metal platine. After the flange formation by means of a suitable process the cylindrical portion of the blank provided with the flange is subjected to another deep drawing process to form the grooves resp. the fluted portions of the tubular shell. The internal surfaces of the grooves, which are adapted to receive the torque transmitting elements of the universal-joint, are finished to a smooth and accurate contour by means of a coining process.

The flange of the tubular shell is provided with an engagement shoulder which is formed by a machining process. The flange formation process is completely separated from the groove formation process and obviously carried through before the latter. Therefrom derives the problem that those radially inner portions of the flange, which are subjected to stresses etc. during the groove formation process, are weakened, thus reducing the transmittable torque of the universal-joint or resulting in the necessity to use thicker-walled cylindrical blanks. Further the coining operation for finishing the internal grooves of the tubular shell is comparably expensive and results in an inhomogeneous stress distribution in the material near the internal surfaces of the grooves.

It is an object of the present invention to provide a manufacturing method for a tubular shell, which manfacturing method produces thin-walled and strong shells without any machining process by means of easily performable sucessive and simultaneous processes.

This object is achieved according to the invention by means of the features of the characterizing portion of claim 1. The inventional simultaneous performance of the preliminary groove formation process and the preliminary flange formation process by which the preliminary' flange of the semi-finished article is produced by applying a forming pressure to the hollow cylindrical blank in a radial direction, while simultaneously expanding one end of the cylindrical blank into a funnel shape, ensures that the later accomplished flange is more homogeneous in its internal stress distribution. Thereby the transmittable torque of the universal-joint is not limited due to weakened portions of the flange of the tubular shell. By using a comparably simple ironing process for finishing the internal surfaces of the grooves is offered pressure relief for the superfluous material during that finishing process thus resulting in a reduction of internal stresses near those highly loaded groove surfaces.

Advantageous modifications of the invention derive from the subclaims.

Brief description of drawings

Fig. 1 is an elevational sectional view for showing how a universal-joint including a shell manufactured according to this invention is connected with rotary shafts;

Fig. 2 is a profile of the shell in Fig. 1;

Fig. 3 is a sectional view taken along the section line 3—3 in Fig. 2;

Figs. 4—6 are charts for showing a manufacturing process;

Fig. 7 and Fig. 8 are an elevational sectional view and a sectional view in plan of an apparatus performing the preliminary forming process (I) illustrated in Figs. 4—6;

Fig. 9 is an elevational sectional view of an apparatus performing the finishing process (III) illustrated in Figs. 4—6;

The manufacturing method applied to a shell of a constant velocity universal-joint, for coupling a differential side gear shaft of a vehicle with a countershaft transmitting the rotational motion of the former, will be described hereunder in detail with reference to the appended drawings.

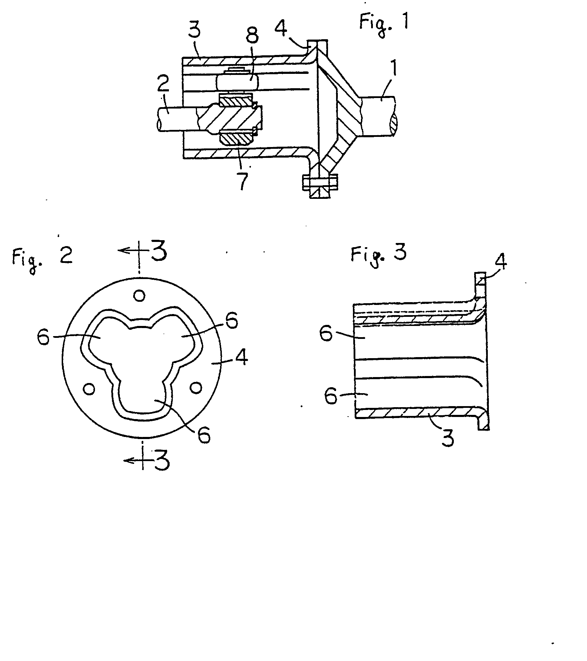

In Figs. 1—3 a universal-joint of tripod type secured on a first rotary shaft respectively a differential side gear shaft 1 for transmitting rotation to a second rotary shaft respectively a countershaft 2 is illustrated. A shell 3 is a hollow cylindrical body open on either end, being connected at one end thereof having a flange 4 with the shaft 1 by means of bolts. The shell 3 is provided on the internal side thereof with three grooves 6 extending along the axis of the cylindrical body. An engaging portion respectively a fixed member 7 secured on the end portion of the countershaft 2 is adapted to be engaged with the groove 6 by way of a further engaging portion respectively a roller 8.

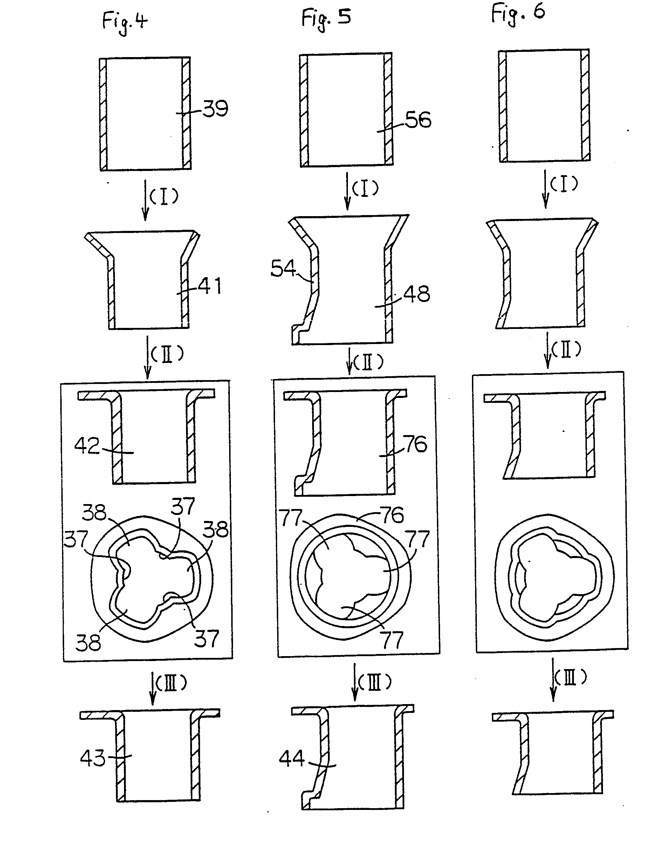

Some preferred embodiments will be described with reference to Figs. 4—6 in which three of respectively different methods of manufacturing a shell are illustrated. Manufacturing method for the shell 43, wherein protruded portions 37 and grooves 38 are parallel to the axis, will be explained first in accordance with Fig. 4. In a first process (I) preliminary formation of grooves is applied to a hollow cylindrical blank 39 so as to make inward protrusions at three places, with a result of forming grooves of desired configuration between every two neighboring protruded portions. This can be performed as described in detail later by insertion of a first die 46 into the hollow cylindrical blank 39, followed by urging a second die 52, 53 on the blank 39 in a direction perpendicular to the axis thereof. A preliminarily formed piece 41 thus obtained will undergo a flange formation in a second process (II) to be a flanged semi-finished article 42. The grooves 38 in the flanged semi-finished article 42 will be finished into those having desired shape and dimension in a subsequent groove ironing process, a third process (III). The manufacture of the shell 43 is completed herewith.

Shells shown in Fig. 5 and Fig. 6 are respectively so shaped as to be adaptable to the shape of the engaging portion of the countershaft 2 which is to be inserted into the shell for connection with the differential side gear shaft 1. The manufacturing method thereof takes the same process as that in the embodiment illustrated in Fig. 4.

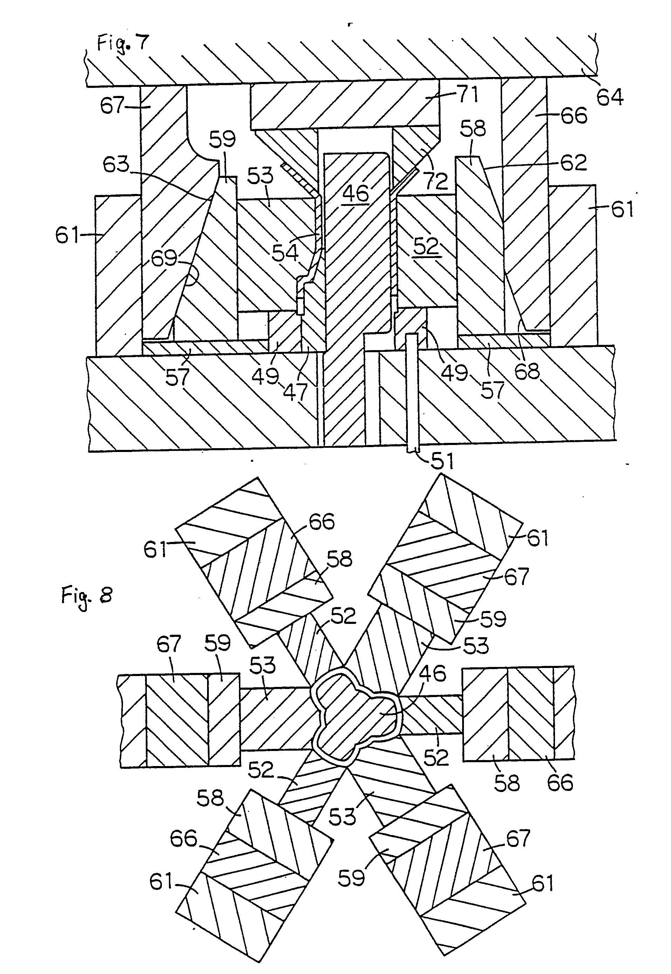

Further detailed description will be made according to Figs 7—9, regarding the most important process of preliminary groove formation (I) and that of groove ironing (III), on an example of manufacturing a shell 44 shown in Fig. 5, along with an apparatus therefor.

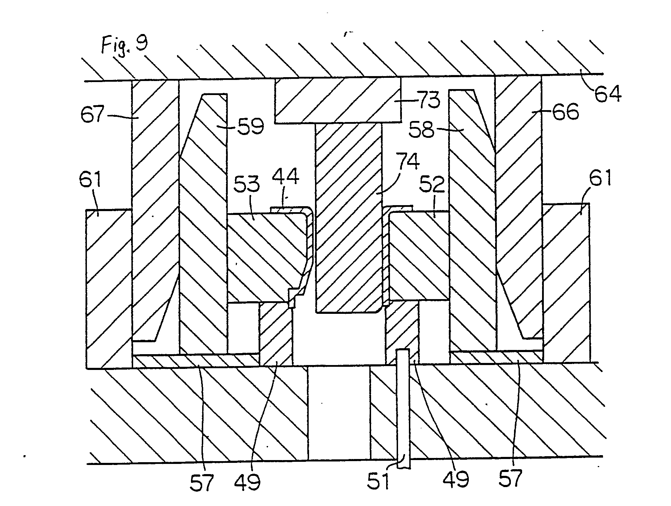

With reference to Figs. 7 and 8 an apparatus for the preliminary groove forming process will be described first, wherein a first die which comprises a punch 46 is secured on a not shown base plate. Three recesses arranged with an angular difference of 120° from each other are formed on the external periphery of the punch 46, so that the outline configuration of the cross-section thereof may be adapted for obtaining a desired preliminarily formed piece, that is to say fittably shaped to the internal cross-sectional outline configuration of the preliminarily formed piece 48 shown in Fig. 5. In the recessed portions of the punch 46 a sub-punch 47 belonging to the first die 46, 47 is respectively fixed with bolts. The punch 46 and the sub-punches 47 may of course by integrally made. The shape of the sub punch 47 is adapted for the formation of radially inwardly protruded portions with desired configuration on the preliminarily formed piece 48. Around the punch 46 and the sub-punches 47 at the foot thereof a spacer 49 is disposed for placing the hollow cyindrical blank 46 thereon. This spacer 49 is connected to eject pins 51 for being pushed upwards in response to the ascending of the eject pins 51. On the spacer 49 three sets of restriction dies 52, 53 opposed to each other repectively are so arranged as to regularly surround the first die 46, 47 around the axis thereof. The restriction dies 53, three in number, are radially arranged respectively with an equal angular distance at the angular position where the sub-punches 47 are secured, that is where the radially inwardly protruded portions 54 are formed on the preliminarily formed piece 48. The restriction dies 52, three in number, are also radially arranged with an equal angular distance. The shape of the internal end surface of the restriction dies 52, 53 is respectively adapted to be suitable for forming the hollow cylindrical blank 56 shown in Fig. 5 into a desired form, that is fitted to the external outline configuration of the preliminarily formed piece 48. Those restriction dies 52, 53 are secured respectively on a movable cam 58, 59 which is disposed outside the restriction dies 52, 53 slidably, under the guidance of a not shown guide rod erected on a fixed block 61, on a sliding base 57. They are laterally (in Fig. 7) movable according to the movement of the movable cams 58, 59 which are biased radially outwardly, that is in a departing direction away from the punch 46, by means of a not shown resilient member made of urethane rubber or a spring, etc., which is attached at one end thereof to the fixed block 61.

The movable cams 58, 59 are respectively provided with a slant surface surface 62, 63 which is gradually converged inside upwards, and urged inwardly owing to descending of fixed cams 66, 67 which are ascended and descended accompanied by an upper base 64, to which they are secured. The fixed cams 66, 67 are respectively provided with a corresponding slant surface 68, 69 to the slant surface 62, 63 on the movable cams 58, 59.

On the lower side of the upper base 64 a preliminary flange forming tool respectively a flange block 72 is secured by way of an attaching block 71.

The preliminary forming process employing the above-mentioned apparatus will be described. The hollow cylindrical blank 56 is fitted on the punch 46 and the sub-punches 47. Descending of the fixed cams 66, 67 along with the upper base 64 at this stage will cause the movable cams 58, 59 to be inwardly urged against the resilient force of the resilient members. This will in turn move the restriction dies 52, 53 secured on the movable cams 58, 59 inwardly so as to urge the side wall of the hollow cyindrical blank 56 fitted on the punch 46 and the sub-punches 47 inwardly. Grooves of almost desired configuration will be formed in this manner on the side wall of the hollow cylindrical blank 56.

Descending of the upper base 64 accompanies the descending of the flange block 72, which will expand the upper end portion of the hollow cylindrical blank 56 outwardly up to a predetermined angle amount. Beside this way of flange forming executed simultaneously with the preliminary forming of the shell, staggering of the flange formation timing from that for the preliminary shell formation is also possible by means of making the flange block 72 independently descend through a different driving source from that for the upper base 64.

Ensuing lift of the fixed cams 66, 67 together with the upper base 64 will cause the ascending of the flange block 72 and the outward retracting of the movable cams 58, 59, owing to the action of the resilient members connected thereto. Subsequent pushing upwards of the spacer 49, due to the action of a not shown cushion mechanism, accompanied by the eject pins 51 causes the preliminarily formed piece 48 to be raised upwards for completing the preliminary forming process after taking out of it from the punches 46, 47.

The preliminarily formed piece 48 thus obtained will consecutively pass the flange formation process and the groove ironing process. The latter process will be described next in relation to an apparatus therefor with reference to Fig. 9.

A punch 74 secured to an upper base 64 via an attaching block 73 is of almost similar shape to the punch 46 shown in Figs. 7 and 8, only the difference being a plus, corresponding to the amount to be reduced in the ironing process, added on the protruded amount on the protrusion formed respectively between two of the three recesses which are shown in Fig. 8. Explanation on the structure of the apparatus can be omitted herewith, because it is identical to that for the preliminary forming in Fig. 7 in other respects. Descendance of the upper base 64 in a status where a flanged semi-finished article 76 shown in Fig. 8 is being placed on a spacer 49 will inwardly urge restriction dies 52, 53 due to the action of fixed cams 66, 67 and movable cams 58, 59 so as to set the flanged semi-finished article 76 at a predetermined position. It is permissible that the punch 74 is partially inserted in advance so long as it does not forcibly affect the flanged semi-finished article 76. According to an ensuing descendance of the upper base 64 accompanied by the punch 74 preliminary axially extending grooves 77 of the flanged semi-finished article 76 will gradually undergo ironing action downwards from the upper part between the punch 74 and the restriction dies 52, 53. Ascending of the upper base 64 after it has reached the lower dead point will cause the restriction dies 52, 53 to be outwardly retracted so as to release the binding force onto a finished tubular shell 44. The groove ironing process is completed herewith.

**Claims**

1. Manufacturing method for a tubular shell (3, 43, 44) of a universal-joint for flexibly coupling a first rotary shaft (1) to a second rotary shaft (2), said shell (3, 43, 44) being adapted to be secured at a flange (4) formed on one end thereof to said first rotary shaft and being provided at suitable places inside thereof with grooves (6) extending along the axis thereof for being engaged with engaging portions (7, 8) disposed on one end of said second rotary shaft which is to be inserted into said shell (3, 43, 44) from the other end thereof, said method comprising processes of groove formation, flange formation and finishing, characterized by

a first step comprising simultaneously subjecting a hollow cylindrical blank (39, 56) to a preliminary flange forming operation wherein a preliminary flange forming tool (72) is applied axially to one end of said blank (39, 56) to expand said one end into a generally funnel shape, and a preliminary groove forming operation wherein radially acting pressing forces are applied to said hollow blank (39, 56) for forming a plurality of preliminary axially extending grooves (38, 77) in the side wall thereof said preliminary grooves extending from the other end of said hollow blank (39, 56) to the junction of the said side wall with said preliminary flange;

a second step wherein said preliminary flange on the semi-finished article (42, 76) is further formed into said completed flange by a flange finishing tool;

and a finishing step comprising an ironing process wherein said preliminary grooves (38, 77) are finished into grooves of accurate shape by means of inserting a punch (74) inside said semi-finished article (42, 76) while said article is restricted from outside by restriction dies (52, 53) movable perpendicularly to the axis of said semi-finished article, said restriction dies (52, 53) acting at portions where said preliminary grooves (38, 77) have been formed.

2. Manufacturing method for a tubular shell according to claim 1, wherein said groove formation in said hollow cylindrical blank (39, 56) is carried through by means of forming a plurality of radially inwardly protruded portions (37, 54) due to a simultaneous application of a drawing process on a plurality of places of said blank with a first die (46, 47) which is inserted in said blank and said restriction dies (53) which are disposed radially outside said blank with an equal angular distance so as to be perpendicularly movable to the axis of said blank.

3. Manufacturing method for a tubular shell according to claim 1 or 2, wherein said restriction dies (52, 53), plural in number, are radially disposed with an equal angular distance, and formation of said radially inwardly protruded portions (37, 54) at a plurality of suitable places of said hollow cylindrical blank (39, 56) is executed at one time by means of simultaneous operation of said restriction dies.

4. Manufacturing method for a tubular shell according to claim 1, 2 or 3, wherein said hollow cylindrical blank is made of a plate material piece (29) formed by means of a drawing process applied by a press machine.

## Patentansprüche

1. Herstellungsverfahren für ein rohrförmiges Gehäuse (3, 43, 44) eines Universalgelenks zur flexiblen Kupplung einer ersten Drehwelle (1) mit einer zweiten Drehwelle (2), wobei das Gehäuse (3, 43, 44) mit einem an seiner einen Stirnseite ausgebildeten Flansch (4) an der ersten Drehwelle befestibar und an passenden Stellen in seinem Inneren mit Kehlen (6) versehen ist, die sich längs seiner Achse erstrecken, um mit Einrückteilen (7, 8), die an einen Ende der in das Gehäuse (3, 43, 44) von dessen anderer Stirnseite her einzusetzenden zweiten Drehwelle angeordnet sind, in Eingriff zu kommen, und wobei das Verfahren die Vorgänge einer Kehlenbildung, Flanschbildung und Endbearbeitung umfaßt, gekennzeichnet

durch einen ersten Schritt, der das gleichzeitige Unterwerfen eines hohlzylindrischen Rohlings (39, 56) gegenüber einem vorbereitenden Flanschbildungsvorgang, wobei ein Vorflansch-Formungswerkzeug (72) axial an einer Stirnseite des Rohlings (39, 56) angewendet wird, um diese eine Stirnseite zu einer allgemein trichterförmigen Gestalt auszuweiten, und gegenüber einem vorläufigen Kehlenbildungsvorgang, wobei radial wirkende Druckkräfte auf den hohlen Rohling (39, 56) aufgebracht werden, un eine Mehrzahl von axial verlaufenden Kehlen (38, 77) in dessen Seitenwand auszugestalten, welche sich von der anderen Stirnseite des hohlen Rohlings (39, 56) bis zur Verbindung der Seitenwand mit dem Vorflansch erstrecken, umfaßt,

durch einen zweiten Schritt, wobei der Vorflansch am Halbfertigteil (42, 76) weiter zu dem Fertigflansch durch ein Flansch-Endbearbeitungswerkzeug verformt wird,

und durch einen Endbearbeitungsschritt, der einen Umformungsvorgang umfaßt, wobei die vorläufigen Kehlen (38, 77) zu Kehlen von genauer Gestalt durch Einführen eines Stempels (74) in das Innere des Halbfertigteils (42, 76) fertigbearbeitet werden, während das Halbfertigteil von außen her durrch rechtwinklig zur Achse des Halbfertigteils bewegbare Spannbacken (52, 53), die an den Teilen wirken, an denen die vorläufigen Kehlen (38, 77) gebildet worden sind, festgehalten wird.

2. Herstellungsverfahren für ein rohrförmiges Gehäuse nach Anspruch 1, dadurch gekennzeichnet, daß die Kehlenbildung im hohlzylindrischen Rohling (39, 56) durch Formen einer Mehrzahl von radial einwärts vorstehenden Teilen (37, 54) infolge einer gleichzeitigen Anwendung eines Ziehvorgangs an mehreren Stellen des Rohlings mit einem ersten, in den Rohling und die Spannbacken (53), die radial außenseitig des Rohlings mit gleichem Winkelabstand so angeordnet sind, daß sie rechtwinklig zur Achse des Rohlings bewegbar sind, eingesetzten Ziehwerkzeug (46, 47) durchgeführt wird.

3. Herstellungsverfahren für ein rohrförmiges Gehäuse nach Anspruch 1 oder 2, dadurch gekennzeichnet, daß die in Mehrzahl vorhandenen Spannbacken (52, 53) radial mit gleichem Winkelabstand agneordnet sind und die Ausbildung der radial einwärts vorstehenden Teile (37, 54) an einer Mehrzahl von passenden Stellen des hohlzylindrischen Rohlings (39, 56) auf einmal durch einen gleichzeitigen Arbeitsvorgang der Spannbacken ausgeführt wird.

4. Herstellungsverfahren für ein rohrförmiges Gehäuse nach Anspruch 1, 2 oder 3, dadurch gekennzeichnet, daß der hohlzylindrische Rohling aus einem Plattenmaterialstück (39) gefertigt wird, das durch einen von einer Presse ausgeführten Ziehvorgang verformt wird.

## Revendications

1. Procédé pour la fabrication d'une coquille tubulaire (3, 43, 44) de joint universel destiné à accoupler de façon souple un premier arbre rotatif (1) à un second arbre rotatif (2), ladite coquille (3, 43, 44) étant apte à être fixée par une bride (4) formée à l'une de ses extrémités audit premier arbre rotatif, et étant munie à des endroits convenables de gorges (6) s'étendant le long de son axe et destinée à se mettre en prise avec des parties de mise en prise (7, 8) disposées à l'une des extrémites dudit second arbre rotatif qui doit être inséré dans ladite coquille (3, 43, 44) à partir de son autre extrémité, ledit procédé comprenant des processus de formation de gorges, de formation de bride et de finition, caractérisé par:

—une première étape consistant à soumettre simultanément une ébauche cylindrique creuse (39, 56) à une opération préliminaire de formation de bride dans laquelle un outil (72) de formage préliminaire de bride est appliqué axialement l'une des extrémités de ladite ébauche (39, 56) pour fairs s'expanser en forme générale d'entonnoir ladite extrémité et à une opération préliminaire de formation de gorge dans laquelle des forces de compression agissant axialement sont appliquées sur ladite ébauche creuse (39, 56) pour former une pluralité de gorges préliminaires (38, 77) s'étendant axialement dans la paroi latérale de celle-ci, lesdites gorges préliminaires s'étendant à partir de l'autre extrémité de ladite ébauche creuse (39, 56) jusqu'a la jonction de ladite paroi latérale avec ladite bride préliminaire;

—une seconde étape dans laquelle ladite bride préliminaire de l'article semi-fini (42, 76) est ensuite formée au moyen d'un outil de finition de bride pour devenir une bride terminée;

—et une étape de finition comprenant un processus de postformage dans lequel lesdites gorges préliminaires (38, 77) sont terminées pour devenir des gorges de forme précise par l'insertion d'un poinçon (74) à l'intérieur dudit article semi-fini (42, 76), tandis que ledit article est rétreint de l'extérieur au moyen de poinçons de rétreint (52, 53) susceptibles de se déplacer perpendiculairement à l'axe dudit article semi-fini, lesdits poinçons de rétreint (52, 53) agissant sur des parties où ont été formées lesdites gorges préliminaires (38, 77).

2. Procédé de fabrication d'une coquille tubulaire selon la revendication 1, dans lequel ladite formation de gorge dans ladite ébauche cylindrique creuse (39, 56) s'effectue au moyen d'une pluralité de parties faisant saillie radialement vers l'intérieur (37, 54), en raison de l'application simultanée d'un processus d'étirage sur une pluralité d'emplacements de ladite ébauche à l'aide d'un premier poinçon (46, 47) qui est inséré dans ladite ébauche et desdits poinçons de rétreint qui sont disposés radialement à l'extérieur de ladite ébauche selon une disposition angulaire régulière de façon à pouvoir se déplacer perpendiculairement à l'axe de ladite ébauche.

3. Procédé de fabrication d'une coquille tubulaire selon la revendication 1 ou 2, dans lequel lesdits poinçons de rétreint (52, 53), qui sont multiples, sont disposés radialement selon une disposition angulaire régulière, et dans lequel la formation desdites parties (37, 54) faisant saillie radialement vers l'intérieur en une pluralité d'endroits convenables de ladite ébauche cylindrique creuse (39, 56), est exécutée en une seule fois grâce au fonctionnement simultané desdits poinçons de rétreint.

4. Procédé de fabrication d'une coquille tubulaire selon la revendication 1, 2 ou 3, dans lequel ladite ébauche cylindrique creuse est réalisée à partir d'un bloc de matériau en forme de plaque (29) formé au moyen d'un processus d'emboutissage réalisé par une presse.

Fig. 1

Fig. 2

Fig. 3

Fig. 4   Fig. 5   Fig. 6

Fig. 7

Fig. 8

3

Fig. 9

4